# EUROPÄISCHE PATENTSCHRIFT

(11) **EP 2 831 492 B1**
(45) Veröffentlichungstag und Bekanntmachung des Hinweises auf die Patenterteilung: **25.05.2016**
(21) Anmeldenummer: 13705971.3
(22) Anmeldetag: 14.02.2013
(51) Int. Cl.: F17C 13/00

(54) **BETRIEBSVERFAHREN FÜR EINE BRENNSTOFFZELLEN-ANLAGE**
OPERATING METHOD FOR A FUEL CELL SYSTEM
PROCÉDÉ POUR FAIRE FONCTIONNER UNE INSTALLATION DE PILES À COMBUSTIBLE

(30) Priorität: 26.03.2012 DE 102012204819
(43) Veröffentlichungstag der Anmeldung: 04.02.2015
(73) Patentinhaber: Bayerische Motoren Werke Aktiengesellschaft, 80809 München (DE)
(72) Erfinder: BRUNNER, Tobias, 85630 Grasbrunn (DE); TOLOSA, Manuel, 80333 München (DE)
(86) Internationale Anmeldenummer: PCT/EP2013/053021
(87) Internationale Veröffentlichungsnummer: WO 2013/143774

(56) Entgegenhaltungen:
- EP-B1- 2 217 845
- DE-A1- 10 358 311
- DE-A1-102004 045 638
- DE-A1-102011 017 206

## Beschreibung

Die Erfindung betrifft ein Betriebsverfahren für eine Brennstoffzellen-Anlage, insbesondere in einem Kraftfahrzeug, mit einem Kühlsystem, über das Abwärme der Brennstoffzellen der Brennstoffzellen-Anlage letztlich an die Umgebungsluft abgeführt wird, sowie mit einem einen Innendruck in der Größenordnung von 150 bar und mehr standhaltenden Tank, in dem Brennstoff für die Brennstoffzellen-Anlage in tiefkaltem Zustand, insbesondere als Kryogen, gespeichert wird, welcher Tank im Speichervolumen einen Wärmetauscher aufweist, über den zum Ausgleich des aus der Entnahme von Brennstoff aus dem Tank resultierenden Druckabbaus gesteuert mittels eines Wärmeträgermittels dem gespeicherten Brennstoff Wärme zuführbar ist.

Zum Stand der Technik wird zunächst neben der DE 10 2011 017 206 beispielsweise auf die EP 2 217 845 B1 verwiesen, in der mögliche Ausführungsformen eines Betriebsverfahrens für einen Kryo-Drucktank, in dem kryogener Wasserstoff zur Versorgung einer Brennstoffzelle eines Kraftfahrzeugs unter überkritischem Druck bei 13 bar oder mehr gespeichert werden kann, beschrieben sind, wobei zum Ausgleich des aus der Entnahme von Wasserstoff aus dem Kryo-Drucktank resultierenden Druckabbaus über ein Regelventil einem im Kryo-Drucktank vorgesehenen Wärmetauscher entweder ein Wärmeträgermittel zugeführt wird oder keine Zufuhr von Wärmeträgermittel in den besagten Wärmetauscher erfolgt. Daneben ist in der erstgenannten DE 10 2011 017 206 eine kryoadsoptive Speichervorrichtung für Wasserstoff oder andere Brennstoffgase beschrieben, die ebenfalls einen Wärmetauscher enthalten kann, um das Adsorbatgas innerhalb des Speicherbehälters zu erwärmen. Dabei kann die Abwärme einer das Brennstoffgas verbrauchenden Brennstoffzellen-Anlage (oder dgl.) verwendet werden, diesen Wärmetauscher zu beliefern.

Ferner sind verschiedene Möglichkeiten zur Kühlung einer zumeist aus einer Vielzahl von Einzel-Brennstoffzellen aufgebauten Brennstoffzellenanlage bekannt, wofür beispielsweise auf die DE 103 48 385 A1 und die DE 100 55 106 B4 verwiesen wird. In der soeben erstgenannten Schrift ist eine Luftkühlung einer Brennstoffzellenanlage in einem Kraftfahrzeug beschrieben, während die soeben zweitgenannte Schrift lehrt, dass bei einer flüssigkeitsgekühlten Brennstoffzellenanlage neben einer Wärmeabgabe über den Kühlflüssigkeitskreislauf an die Umgebungsluft auch eine Wärmeabgabe über den Kühlflüssigkeitskreislauf an einen außerhalb eines Reservoirs für kryogenen Wasserstoff vorgesehenen Wärmetauscher erfolgt, in welchem der aus dem besagten Reservoir entnommene Wasserstoff erwärmt wird.

Insbesondere bei einer in einem Kraftfahrzeug verbauten Brennstoffzellen-Anlage können hinsichtlich der angeforderten bzw. abzugebenden Leistung hohe Schwankungen auftreten. Dabei kann es sinnvoll sein, das übliche, die Abwärme letztlich an die Umgebungsluft abführende Kühlsystem der Brennstoffzellen-Anlage nicht solchermaßen zu dimensionieren, dass ein nur in wenigen Ausnahmefällen benötigter quasi maximal möglicher Kühlleistungsbedarf abgedeckt werden kann. Damit wäre nämlich das Kühlsystem der Brennstoffzellen-Anlage für beispielsweise 98% der Anlagen-Betriebszeit schlichtweg überdimensioniert, was gewisse Nachteile bei Bauraum, Gewicht und Kosten zur Folge hat. Wenn an einer Brennstoffzellen-Anlage mit einem auf einen geringeren als den maximal möglichen Kühlleistungsbedarf dimensionierten Kühlsystem in Ausnahmefällen tatsächlich ein höher Kühlleistungsbedarf auftritt, als das übliche Kühlsystem darstellen kann, so müsste dann die Leistungsabgabe der Brennstoffzellen-Anlage reduziert werden.

Letzteres ist jedoch unerwünscht, weshalb vorliegend eine Abhilfemaßnahme für diese Problematik aufgezeigt werden soll (= Aufgabe der vorliegenden Erfindung). Die Lösung dieser genannten Aufgabe ist dadurch gekennzeichnet, dass in Betriebs-Punkten oder -Zuständen der Brennstoffzellen-Anlage, in denen die Abwärme der Brennstoffzellen nicht im erforderlichen Umfang an die Umgebung abgegeben werden kann, solange zumindest ein Teil der Abwärme der Brennstoffzellen dem Wärmetauscher im den Brennstoff speichernden Tank zugeführt wird, bis ein vorgegebener Grenzwert für den Tank-Innendruck erreicht ist.

In anderen Worten ausgedrückt wird vorliegend vorgeschlagen, bei Eintreten eines außergewöhnlichen hohen Kühlleistungsbedarfs einen Teil der Abwärme der Brennstoffzellen-Anlage in den den Brennstoff für die Brennstoffzellen-Anlage enthaltenden Tank einzuleiten. Da mit einer Entnahme von Brennstoff aus dem Tank ohnehin eine Wärmezufuhr in den Tank erfolgen muss, um eine einfache Abgabe von Brennstoff aus dem Tank auch dann darstellen zu können, wenn aufgrund der Brennstoff-Entnahme ein Minimaldruck im Tank erreicht ist, unterhalb dessen eine Versorgung der Brennstoffzellen-Anlage alleine aufgrund der Druckdifferenz nicht mehr gewährleistet ist, führt diese vorgeschlagene Maßnahme nicht zu signifikantem Mehraufwand. Dabei kann jedoch nur solange eine solche zusätzliche Kühlung durch den tiefkalten Inhalt des Tanks erfolgen, bis ein vorgegebener Grenzwert für den Tank-Innendruck, der sich durch diese Wärmezufuhr zwangsläufig erhöht, erreicht wird. Dabei sollte dieser vorgegebene Grenzwert geringer sein als der maximal zulässige Tank-Innendruck, da der Fall eintreten kann, dass das Fahrzeug nach Erreichen dieses vorgegebenen Grenzwerts abgestellt wird, wonach kein Druckabbau durch Entnahme von Brennstoff erfolgt, aber durch unvermeidbaren geringen Wärmeeintrag in den Tank über dessen Wände der Druck im Tank noch etwas weiter ansteigen kann.

Vorzugsweise wird das hier vorgeschlagene Betriebsverfahren (gemäß Anspruch 4) an einer Brennstoffzellen-Anlage durchgeführt, die Wasserstoff als Brennstoff verwendet, der in kryogener Form unter überkritischem Druck bei 13 bar oder mehr in einem als Kryo-Drucktank ausgebildeten Tank gespeichert wird, so wie dies beispielsweise in der bereits genannten EP 2 217 845 B1 beschrieben ist. Der besondere Vorteil bei Verwendung eines Kryo-Drucktanks ist darin zu sehen, dass in einem solchen Tank der gespeicherte Wasserstoff dann, wenn der Tank nur noch zu zwei Drittel oder weniger befüllt ist, üblicherweise unter einem Druck von weit weniger als 2/3 des zulässigen Maximaldrucks vorliegt. Somit besteht ein relativ hohes Potential zusätzlicher Kühlleistung durch den Tank-Inhalt, indem der im Tank befindliche Wasserstoff erwärmt wird, wobei diese Erwärmung zwar eine Druckerhöhung bewirkt, die jedoch solange, als ein vorgegebener Grenzwert für den Tank-Innendruck nicht erreicht ist, unproblematisch ist. Da wie erwähnt mit einer Entnahme von Wasserstoff aus dem Tank dann, wenn aufgrund der Brennstoff-Entnahme ein Minimaldruck erreicht ist, unterhalb dessen eine Versorgung der Brennstoffzellen-Anlage alleine aufgrund der Druckdifferenz nicht mehr gewährleistet ist, dem im Tank befindlichen Wasserstoff ohnehin Wärme zur Druckerhöhung zugeführt wird, kann eine solche Wärmezufuhr auch in Verbindung mit einer ggf. erforderlichen Kühlung der Brennstoffzellen-Anlage, die durch deren übliches, die Wärme letztlich an die Umgebungsluft abgebendes Kühlsystem nicht vollständig wahrgenommen werden kann, dargestellt werden.

In einer Weiterbildung der Erfindung kann analog der genannten EP 2 217 845 B1 als Wärmeträgermittel für den im Tank vorgesehenen internen Wärmetauscher aus dem Tank entnommener und in einem externer Wärmetauscher erwärmter Brennstoff verwendet und über eine von einer zum Verbraucher führenden Versorgungsleitung abzweigende Zweigleitung dem internen Wärmetauscher zugeführt und nach Durchströmen desselben in die Versorgungsleitung stromab des Abzweigs der Zweigleitung eingeleitet werden. Auf diese Weise wird in den Tank kein "fremdes" Medium eingebracht, während die Abwärme der Brennstoffzellen in den besagten Betriebspunkten eines außergewöhnlich hohen Kühlleistungsbedarfs dem genannten externen Wärmetauscher zugeführt wird. Vorzugsweise wird für letzteres ein flüssiges Wärmeträgermittel verwendet, da hiermit unter Beanspruchung eines kleineren Bauraumes größere Wärmemengen (von der Brennstoffzellen-Anlage zum besagten externen Wärmetauscher) übertragbar sind als bei Verwendung von einem gasförmigen Wärmeträgermittel, bspw. Luft, wenngleich die Verwendung letzterer in Abhängigkeit von individuellen Randbedingungen auch möglich ist und insbesondere auch sinnvoll sein kann.

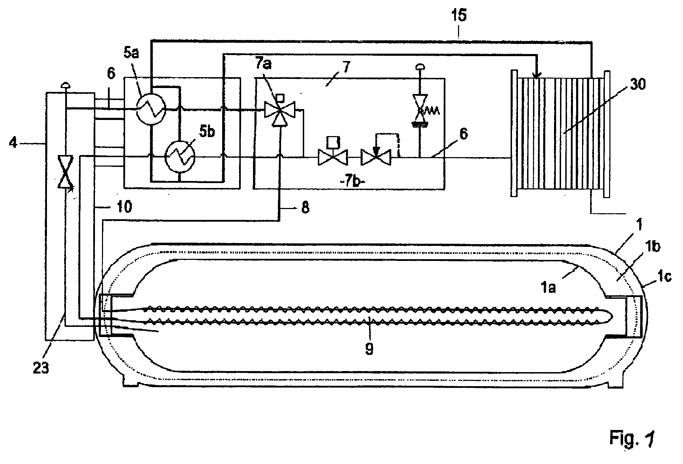

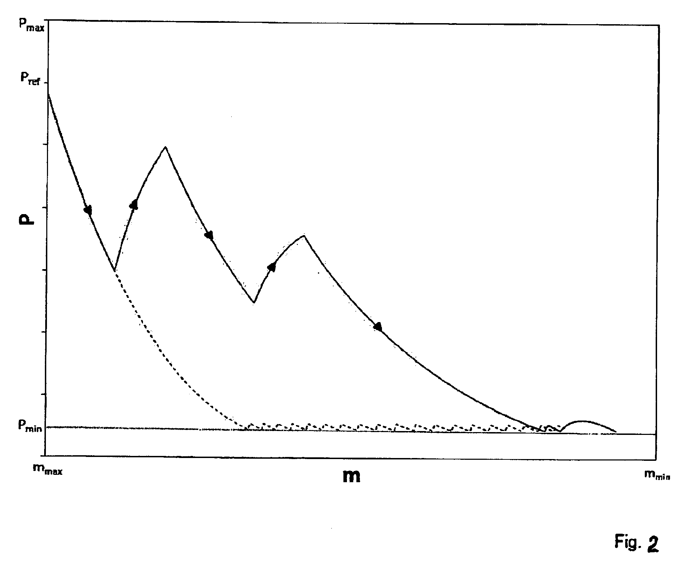

Die beiden beigefügten Figuren dienen der weiteren Erläuterung der Erfindung, wobei Fig.1 prinzipiell einen Kryö-Drucktank mit relevanter Peripherie zur Durchführung einer Ausführungsform des erfindungsgemäßen Betriebsverfahrens zeigt, während in Fig.2 ein Diagramm dargestellt ist, in dem über einen vollständigen Entleerungsprozesses des Tanks hinweg über der auf der Abszisse aufgetragenen Masse des im Kryo-Drucktank nach Fig.1 befindlichen Wasserstoffs der Verlauf des auf der Ordinate aufgetragenen Drucks des im Tank gespeicherten Wasserstoffs beispielhaft dargestellt ist.

Zunächst auf Figur 1 Bezug nehmend ist hierin prinzipiell ein Kryo-Drucktank 1 inklusive seiner für das Verständnis der vorliegenden Erfindung erforderlichen Peripherie dargestellt. Im Kryo-Drucktank 1 (auch nur Tank 1 genannt) kann kryogener Wasserstoff zur Versorgung einer nur abstrakt dargestellten Brennstoffzellen-Anlage 30 unter Absolutdruckwerten des Tank-Innendrucks in der Größenordnung von 150 bar oder mehr, zumindest jedoch unter überkritischem Druck bei 13 bar und mehr, gespeichert werden. Dieser Kryo-Drucktank 1 besteht aus einem druckfesten Innentank 1a, innerhalb dessen sich der kryogene Wasserstoff im überkritischen Zustand befindet, und ferner aus einer diesen umgebenden Isolationsschicht 1 b, in der im wesentlichen Vakuum vorliegt, sowie aus einer dieses Vakuum einschließenden Außenhülle 1c.

Über eine kombinierte und somit einflutige Befüll- und Entnahmeleitung 23 kann der Innentank 1a mit kryogenem Wasserstoff im überkritischem Zustand befüllt werden und es kann über diese Befüll-Entnahmeleitung 23, die in einer nur abstrakt dargestellten und für die vorliegende Erläuterung nicht wesentlichen Kryo-Ventileinheit 4 verläuft bzw. mündet, Wasserstoff aus dem Innentank 1a entnommen werden. Hierfür ist an die Ventileinheit 4 ein erster bzw. externer Wärmetauscher 5a angeschlossen, durch den einerseits ein erster Wärmeträgerkreislauf 15 und zweitens eine von der Ventileinheit 4 abgehende sich dabei an die Befüll-Entnahmeleitung 23 anschließende Versorgungsleitung 6 geführt ist, die letztlich zur Brennstoffzellen-Anlage 30 führt. Über den Wärmetauscher 5a steht die Versorgungsleitung 6 mit dem ersten Wärmeträgerkreislauf 15 in wärmeübertragender Verbindung, so dass der in der Versorgungsleitung 6 geführte Wasserstoff im externen ersten Wärmetauscher 5a erwärmt wird.

Im Anschluss an den externen ersten Wärmetauscher 5 ist die Versorgungsleitung 6 in eine zweite Ventileinheit 7 geführt, durch welche die Versorgungsleitung 6 unter Passieren eines Tankdruck-Regelventils 7a sowie einer Druckregeleinheit 7b hindurchgeführt ist, ehe sie zur Brennstoffzellen-Anlage 30 gelangt. Dabei zweigt vom Tankdruck-Regelventil 7a eine Zweigleitung 8 ab, durch die aus dem Kryo-Drucktank 1 entnommener und im ersten (externen) Wärmetauscher 5a erwärmter Wasserstoff in einen zweiten, innerhalb des Innentanks 1a des Kryo-Drucktanks 1 vorgesehenen (internen) Wärmetauscher 9 eingeleitet wird. Nach Durchströmen dieses zweiten, innerhalb des Kryo-Drucktanks 1, genauer innerhalb von dessen Innentank 1a vorgesehenen Wärmetauschers 9 wird dieser Wasserstoff über eine Rückführleitung 10 in die Versorgungsleitung 6 stromab des Abzweigs der Zweigleitung 8 eingeleitet, wobei diese Rückführleitung 10 zuvor durch einen dem ersten (externen) Wärmetauscher 5a parallel geschalteten und vom gleichen Wärmeträgerkreislauf 15 versorgten dritten (externen) Wärmetauscher 5b hindurch geführt ist, in dem der im zweiten internen Wärmetauscher 9 abgekühlte Wasserstoff durch Wärmetausch mit dem genannten Wärmeträgerkreislauf 15 wieder erwärmt wird. Es fungiert also der durch die Zweigleitung 8 sowie den zweiten internen Wärmetauscher 9 und die Rückführleitung 10 geführte Wasserstoff als Wärmeträgermittel zur Erwärmung des im Kryo-Drucktank 1 gespeicherten Wasserstoffs. Dabei erfolgt die Steuerung bzw. Regelung dieser Erwärmung durch die Zufuhr von besagtem Wärmeträgermittel bzw. Wasserstoff zum internen Wärmetauscher 9 und somit durch die Schaltstrategie des Tankdruck-Regelventils 7a gesteuert bzw. geregelt, bspw. solchermaßen, dass der Druck des im Tank 1 befindlichen Wasserstoff einen Minimalwert, der ohne Verwendung einer Pumpe oder dgl. für die sichere Versorgung der Brennstoffzellen-Anlage 30 mit Wasserstoff erforderlich ist und der bspw. in der Größenordnung von 5 bar liegen kann, nicht unterschritten wird. Eine weitere mögliche Schaltstrategie des besagten Tankdruck-Regelventils 7a kann vorsehen, dass die Temperatur des im Tank 1 befindlichen Wasserstoffs nicht unter die kritische Temperatur von Wasserstoff, die bei 33,18 Kelvin liegt, fällt. Diese soweit genannten Regelungs-Kriterien können in Abhängigkeit vom Füllgrad oder Füllzustand des Tanks 1 auch parallel oder sequentiell berücksichtigt werden, so wie dies in einer weiteren Patentanmeldung mit gleichem Prioritäts- bzw. Anmeldetag wie die vorliegende Anmeldung und dem Titel "Betriebsverfahren für einen Kryo-Drucktank" beschrieben ist, und auf die bzw. deren Inhalt hiermit vollumfänglich Bezug genommen wird.

In den ersten Wärmeträgerkreislauf 15 ist die Brennstoffzellen-Anlage 30 bzw. deren Kühlsystem solchermaßen eingebunden, dass die beim Betrieb der Brennstoffzellenanlage 30 entstehende Abwärme zumindest anteilig an die Wärmetauscher 5a und 5b und über diese an den durch den zweiten, inneren Wärmetauscher 9 geführten Wasserstoff abführbar ist, wenn ein Wärmeträgermittel über diesen Wärmeträgerkreislauf 15 zwischen der Brennstoffzellen-Anlage 30 und den Wärmetauschern 5a, 5b umgewälzt wird. Hierfür ist im Wärmeträgerkreislauf 15 eine ein- bzw. ausschaltbare Förderpumpe 31 vorgesehen. Neben dem Wärmeträgerkreislauf 15 ist ein weiterer, die Umgebungsluft als Temperatursenke verwendender figürlich nicht dargestellter Wärmeträgerkreislauf zur Abfuhr der Betriebswärme der Brennstoffzellenanlage 30 vorgesehen, der vorrangig zur Kühlung der Brennstoffzellenanlage 30 verwendet wird.

Eine Kühlung der Brennstoffzellenanlage 2 über den Wärmeträgerkreislauf 15 und somit unter Einbindung des Kältepotentials des im Innentank 1a des Kryo-Drucktanks 1 gespeicherten Wasserstoffs erfolgt durch Inbetriebnahme bzw. Betrieb der Förderpumpe 31 beispielsweise in denjenigen Betriebszuständen des Kryo-Drucktanks 1, in denen eine Wärmezufuhr in den Innentank 1a erfolgen muss, um entweder die Temperatur T des darin gespeicherten Wasserstoffs oberhalb der kritischen Temperatur von 33,14 Kelvin zu halten oder um den Druck p dieses Wasserstoffs oberhalb eines Minimaldrucks pₘᵢₙ zu halten, wie dies vorhergehend kurz beschrieben wurde. Erfindungsgemäß erfolgt eine Kühlung der Brennstoffzellenanlage 2 über den Wärmeträgerkreislauf 15 und somit unter Einbindung des Kältepotentials des im Tank 1 gespeicherten Wasserstoffs durch Inbetriebnahme bzw. Betrieb der Förderpumpe 31 aber auch dann, wenn ein solch hoher Kühlleistungsbedarf in/an der Brennstoffzellenanlage 30 besteht, dass dieser nicht alleine durch den anderen figürlich nicht dargestellten und die Umgebungsluft als Temperatursenke verwendenden Wärmeträgerkreislauf abdeckt werden kann.

Wenn also zeitweise die Brennstoffzellenanlage 30 eine extrem hohe Kühlung benötigt, die durch einen bzw. den die Umgebungsluft als Temperatursenke nutzenden (und in Fig.1 nicht dargestellten) Wärmeträgerkreislauf nicht darstellbar ist, so kann unabhängig von der Temperatur T im Innentank 1a des Kryo-Drucktanks 1 solange das Kältepotential des in diesem Innentank1a befindlichen Wasserstoffs zur Kühlung der Brennstoffzellen-Anlage 30 genutzt werden, als der Druck p im Innentank 1a als Folge dieser zusätzlichen Wärmezufuhr in den Innentank 1a nicht auf Werte oberhalb eines vorgegebenen Grenzwertes bzw. Maximaldrucks hinaus ansteigt. Dementsprechend wird bei solchem hohem Kühlleistungsbedarf der Brennstoffzellenanlage 30 die Förderpumpe 31 und das Regelventil 7a von einer geeigneten elektronischen Steuereinheit angesteuert, was durchaus sinnvoller sein kann, als wenn die Brennstoffzellenanlage 30 wegen Überhitzungsgefahr in einen Sonderbetriebsmodus mit erheblich reduzierter Leistungsabgabe gefahren werden müsste. Ein beispielhafter Verlauf des Drucks p über der Masse m des im Innentank 1 a befindlichen Wasserstoffs ist für mehrere solche im Verlauf der vollständigen Entleerung des Tanks erforderliche intensive Kühlvorgänge der Brennstoffzellenanlage in Fig.2 mit durchgezogener Linie dargestellt. Diejenigen Kurvenabschnitte, die bei abnehmender Masse m eine Steigerung des Drucks p beschreiben, verdeutlichen eine kombinierte Entnahme von Wasserstoff aus dem Tank 1 mit gleichzeitiger Kühlung der Brennstoffzellen-Anlage 30 über den Wärmeträgerkreislauf 15 gemäß den vorangegangenen Erläuterungen. In Fig.2 ist ferner noch gestrichelt der Verlauf des Drucks p über der Masse m bei fortlaufender Entnahme von Wasserstoff aus dem Tank 1 dargestellt, wenn keine über die normale Kühlung der Brennstoffzellen-Anlage 30 mit Wärmeabgabe an die Umgebung hinausgehende bzw. zusätzliche Kühlung durch das Kältepotential des Inhalts des Tanks 1 erforderlich ist. Man erkennt beim Vergleich diesen beiden Kurven, dass mit dem intensiven Wärmeeintrag für die Kühlung der Brennstoffzellen-Anlage 30 eine ansonsten quasi getaktete (und sich im Sägezahnprofil in der gestrichelten Kurve in Fig.2) darstellende Wärmezufuhr zur Einhaltung der Temperatur des Wasserstoffs im Tank 1 oberhalb der kritischen Temperatur bzw. des besagten Minimaldrucks pₘᵢₙ zur Versorgung der Brennstoffzellen-Anlage 30 nicht mehr benötigt wird, im Gegenzug aber bedarfsgerecht für den Kühlbedarf der Brennstoffzellen-Anlage 30 zumindest ein Teil von deren Abwärme in den Tank 1 eingeleitet werden kann.

## Patentansprüche

1. Betriebsverfahren für eine Brennstoffzellen-Anlage (30), insbesondere in einem Kraftfahrzeug, mit einem Kühlsystem, über das Abwärme der Brennstoffzellen der Brennstoffzellen-Anlage (30) letztlich an die Umgebungsluft abgeführt wird,
sowie mit einem einen Innendruck in der Größenordnung von 150 bar und mehr standhaltenden Tank (1), in dem Brennstoff für die Brennstoffzellen-Anlage in tiefkaltem Zustand, insbesondere als Kryogen, gespeichert wird, welcher Tank (1) im Speichervolumen (1 a) einen Wärmetauscher (9) aufweist, über den zum Ausgleich des aus der Entnahme von Brennstoff aus dem Tank (1) resultierenden Druckabbaus gesteuert mittels eines Wärmeträgermittels dem gespeicherten Brennstoff Wärme zuführbar ist,
**dadurch gekennzeichnet,**
**dass** in Betriebspunkten oder Betriebszuständen der Brennstoffzellen-Anlage (30), in denen die Abwärme der Brennstoffzellen nicht im erforderlichen Umfang an die Umgebung abgegeben werden kann, solange zumindest ein Teil der Abwärme der Brennstoffzellen dem Wärmetauscher (9) im den Brennstoff speichernden Tank (1) zugeführt wird, bis ein vorgegebener Grenzwert für den Tank-Innendruck erreicht ist.

2. Betriebsverfahren nach Anspruch 1, wobei als Wärmeträgermittel für den im Tank (1) vorgesehenen internen Wärmetauscher aus dem Tank (1) entnommener und in einem externen Wärmetauscher (5) erwärmter Brennstoff über eine von einer zur Brennstoffzellen-Anlage (30) führenden Versorgungsleitung (6) abzweigende Zweigleitung (8) dem internen Wärmetauscher (9) zugeführt und nach Durchströmen desselben in die Versorgungsleitung (6) stromab des Abzweigs der Zweigleitung (8) eingeleitet wird,
und wobei in den besagten Betriebspunkten ein Teil der Abwärme der Brennstoffzellen dem externen Wärmetauscher (5) zugeführt wird.

3. Betriebsverfahren nach Anspruch 2, wobei ein insbesondere flüssiges Wärmeträgermittel für die Wärmeabfuhr von der Brennstoffzellen-Anlage (30) zum besagten externen Wärmetauscher (5) verwendet wird.

4. Betriebsverfahren nach einem der vorangegangenen Ansprüche, wobei als Brennstoff kryogener Wasserstoff unter überkritischem Druck bei 13 bar oder mehr in einem als Kryo-Drucktank (1) ausgebildeten Tank (1) gespeichert wird.

## Claims

1. An operating method for a fuel cell system (30), more especially in a motor vehicle, having a cooling system by which waste heat from the fuel cells of the fuel cell system (30) is eventually dissipated into the ambient air, and having a tank (1) which withstands an internal pressure of the order of 150 bar and above, and in which fuel for the fuel cell system is stored in a cryogenic state, more especially as cryogenic fuel, which tank (1) has in its storage volume (1 a) a heat exchanger (9) by which heat can be supplied to the stored fuel in a controlled manner by a heat transfer medium to compensate for the reduction in pressure resulting from the removal of fuel from the tank (1), **characterised in that** at operating points or in operating states of the fuel cell system (30) in which the waste heat from the fuel cells cannot be released into the surroundings to the required extent, at least some of the waste heat from the fuel cells is supplied to the heat exchanger (9) in the tank (1) storing the fuel until a predetermined limiting value for the internal pressure of the tank is reached.

2. An operating method according to claim 1, wherein fuel heated in an external heat exchanger (5) and removed from the tank (1) as heat transfer medium for the internal heat exchanger provided in the tank (1) is supplied to the internal heat exchanger (9) by a branch line (8) branching off from a supply line (6) leading to the fuel cell system (30) and after flowing through said internal heat exchanger, is introduced into the supply line (6) downstream of the branching-off point of the branch line (8), and wherein some of the waste heat from the fuel cells is supplied to the external heat exchanger (5) at said operating points.

3. An operating method according to claim 2, wherein a particularly liquid heat transfer medium is used for the removal of heat from the fuel cell system (30) to said external heat exchanger (5).

4. An operating method according to any one of the preceding claims, wherein cryogenic hydrogen is stored under supercritical pressure at 13 bar or more as the fuel in a tank (1) configured as a cryogenic pressure tank (1).

## Revendications

1. Procédé de gestion d'une installation de cellules électrochimiques (30) en particulier dans un véhicule comprenant un système de refroidissement par l'intermédiaire duquel la chaleur dissipée par les cellules électrochimiques de l'installation (30) est en fin de compte évacuée dans l'air environnant,
ainsi qu'un réservoir (1) résistant à une pression interne de l'ordre de grandeur de 150 bars et plus, dans lequel un combustible pour l'installation de cellules électrochimiques est accumulé à un état de très basse température, en particulier dans un état cryogénique, ce réservoir (1) comprenant, dans son volume d'accumulation (1a) un échangeur de chaleur (9) par l'intermédiaire duquel, pour compenser la chute de pression résultant du prélèvement de combustible dans réservoir (1), de la chaleur peut être transférée de façon commandée au combustible accumulée au moyen d'un fluide caloporteur,
**caractérisé en ce que**
dans des points de fonctionnement ou des états de fonctionnement de l'installation de cellules électrochimiques (30) dans lesquelles la chaleur dissipée par les cellules électrochimiques ne peut pas être transférée dans la mesure nécessaire dans l'environnement, au moins une partie de la chaleur dissipée par les cellules électrochimiques est conduite à l'échangeur de chaleur (9) monté dans le réservoir (1) accumulant le combustible jusqu'à ce qu'une valeur limite prédéterminée de la pression interne dans le réservoir ait été atteinte.

2. Procédé de gestion conforme à la revendication 1,
selon lequel, en tant que fluide caloporteur pour l'échangeur de chaleur interne monté dans le réservoir (1), du combustible prélevé du réservoir (1) et chauffé dans un échangeur de chaleur externe (5) est transféré vers l'échangeur de chaleur interne (9), par une conduite de dérivation (8) montée en dérivation sur une conduite d'alimentation (6) conduisant à l'installation de cellules électrochimiques (30), et après passage au travers de cet échangeur de chaleur est introduit dans la conduite d'alimentation (6) en aval de la dérivation de la conduite de dérivation (8), et, dans les points de fonctionnement susmentionnés une partie de la chaleur dissipée par les cellules électrochimiques est transférée vers l'échangeur de chaleur externe (5).

3. Procédé de gestion conforme à la revendication 2,
**caractérisé en ce qu'**
on utilise un fluide caloporteur en particulier liquide pour permettre l'extraction de chaleur de l'installation de cellules électrochimiques (30) vers l'échangeur de chaleur externe (5) susmentionné.

4. Procédé de gestion conforme à l'une des revendications précédentes,
selon lequel
en tant que combustible on accumule de l'hydrogène cryogénique sous une pression sur-critique de 13 bars ou plus dans un réservoir (1) réalisé sous la forme d'un réservoir sous pression cryogénique (1).
